(19) Europäisches Patentamt
European Patent Office
Office européen des brevets

(11) Veröffentlichungsnummer: **0 283 806**
**B1**

(12) # EUROPÄISCHE PATENTSCHRIFT

(45) Veröffentlichungstag der Patentschrift: **08.08.90**

(51) Int. Cl.5: **C09K 5/00**

(21) Anmeldenummer: **88103422.7**

(22) Anmeldetag: **05.03.88**

(54) **Nitrit- und phosphatfreie Kühlstoffmischungen auf Glykolbasis.**

(30) Priorität: **14.03.87 DE 3708298**

(43) Veröffentlichungstag der Anmeldung: **28.09.88 Patentblatt 88/39**

(45) Bekanntmachung des Hinweises auf die Patenterteilung: **08.08.90 Patentblatt 90/32**

(84) Benannte Vertragsstaaten: **BE DE ES FR GB IT NL SE**

(56) Entgegenhaltungen:
**US-A- 4 382 008**
**US-A- 4 466 902**

**PATENT ABSTRACTS OF JAPAN, Band 8, Nr. 46 (C-212)[1483], 29. Februar 1984; & JP-A-59 206 676 (ITSUPOUSHIYA YUSHI KOGYO K.K.) 01-12-1983**

(73) Patentinhaber: **BASF Aktiengesellschaft, Carl-Bosch-Strasse 38, D-6700 Ludwigshafen(DE)**

(72) Erfinder: **Gousetis, Charalampos, Dr., Carl-Bosch-Strasse 98, D-6700 Ludwigshafen(DE)**
Erfinder: **Oppenlaender, Knut, Dr., Otto-Dill-Strasse 23, D-6700 Ludwigshafen(DE)**
Erfinder: **Liebold, Gert, Dr., Hundert Morgen 37, D-6803 Edingen-Neckarhausen(DE)**
Erfinder: **Frey, Guenter, Dr., Mainstrasse 13, D-6701 Dannstadt-Schauernheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft nitrit- und phosphatfreie Kühlstoffmischungen auf Glykolbasis mit einem Gehalt an Alkalisalzen von Alkylen-bis-phenoxycarbonsäuren, Silikaten und Silikatstabilisatoren.

Moderne Kühlstoffe für Verbrennungsmotoren enthalten meistens Glykole (Ethylen- oder Propylenglykol) als Hauptkomponente. Im Kühlsystem werden sie mit Wasser verdünnt und sollen neben Frostschutz auch für eine gute Wärmeabfuhr sorgen. Glykol/Wasser-Mischungen sind allerdings bei den hohen Betriebstemperaturen von Verbrennungsmotoren sehr korrosiv und deswegen müssen die verschiedenen Metalle und deren Legierungen, die im Automobilkühlsystem vorkommen, ausreichend vor Korrosion geschützt werden.

Diese Aufgabe übernehmen die verschiedenen Additive (Korrosionsinhibitoren), welche in Kühlstoffen enthalten sind z.B. Alkalinitrate, Alkalinitrite, Alkalisilikate, Benzoate, Alkanolamine, Phosphate, Triazole, u.a., neben Natrium- oder Kalziumhydroxid und Alkaliborate, die für eine ausreichende Alkalireserve sorgen, zur Neutralisation von sauren Oxidationsprodukten.

Nitrite gehören zu den wirksamsten Korrosionsinhibitoren gegen Eisen-Korrosion, können allerdings mit primären und sekundären Aminen unter Bildung von hochgiftigen Nitrosaminen reagieren. Dies kann insbesondere dann vorkommen, wenn verschiedene Kühlstoffqualitäten gemischt werden, was z.B. beim Nachfüllen im Autokühler der Fall sein kann.

Probleme kann es auch bei der Verwendung von Phosphaten geben, welche neben Eisen auch Aluminium durch Bildung von Deckschichten schützen können, und zwar dann, wenn das zugemischte Wasser eine hohe Härte aufweist. Die dabei ausfallenden Erdalkaliphosphate können zu Störungen durch z.B. schlechte Wärmezufuhr, Erosion oder sogar zu Kühlerverstopfungen führen.

Die Aufgabe dieser Erfindung war somit Kühlstoffe herzustellen, die amin-, nitrit- und phosphatfrei sind und welche trotzdem die im Kühlsystem vorkommenden metallischen Werkstoffe ausreichend schützen.

In der japanischen Offenlegungsschrift 206 676 von 1983 werden Kühlstoffe beschrieben, die neben Monoethylenglykol und Wasser als Hauptkomponente Triethanolaminphosphat, Natriumphosphat, Benzotriazol und Salze, insbesondere Triethanolaminsalze, der Säuren I enthalten,

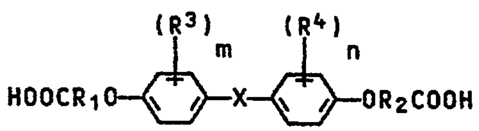 (I)

wobei
$R^1$, $R^2$, $R^3$ und $R^4$ Kohlenwasserstoff-Reste,
m und n 0, 1, 2, 3, und
X die Reste -O-, -S-, $-SO_2-$, -SO- oder Kohlenwasserstoff-Reste sowie die am Kern hydrierten Produkte bedeuten.

Der Hauptnachteil dieser Formulierungen ist allerdings ihr Phosphatanteil der zu den oben geschilderten Problemen führen kann.

Aus der DE-A1 3 440 194 sind ferner Kühlflüssigkeiten beschrieben, die zur Korrosionsstabilisierung Organosilan-Silikat-Copolymere enthalten. Die dort beschriebenen Kühlstoffmischungen benötigen jedoch Na-nitrit, das die oben angegebenen Nachteile hat.

Es wurde nun überraschenderweise gefunden, daß man auf Phosphat und Nitritzusätze verzichten kann und die Formulierungen einen sehr wirksamen Korrosionsschutz aufweisen, wenn sie enthalten neben Ethylen- und/oder Propylenglykol und Wasser

a) 1 - 5 Gew.% der Alkalisalze der Säure II

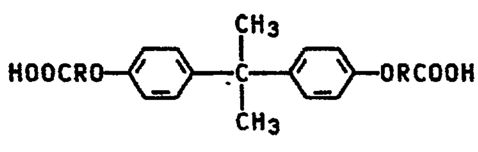 (II),

bedeutet,

b) 0,1 - 1 Gew.% Silikate der allgemeinen Formel III

$$(MO)_q SiO_{\frac{4-q}{2}} \qquad (III),$$

in der M ein Alkalimetall und
q die Werte 0,4 bis 4 bedeutet,

c) 0,01 - 0,2 Gew.% eines Silikatstabilisators
d) 0 - 0,5 Gew.% Alkalinitrate
e) 0,05 - 0,2 Gew.% Benzo- oder Tolutriazol
f) 0,5 - 2 Gew.% Borax
g) 0,05 - 1 Gew.% NaOH,

wobei alle Prozentangaben auf das in der Kühlstoffmischung enthaltenen Glykol bezogen sind.

Unter Kühlstoffmischung im Sinne der Erfindung ist in der Regel die noch nicht mit Wasser vermischte silikathaltige Formulierung auf Glykolbasis zu verstehen.

Solche Kühlstoffmischungen sind allgemein bekannt und beispielsweise in Ullmann "Enzyklopädie der Technischen Chemie", 4. Auflage, Band 12, Seite 205 f. beschrieben.

Die Bis-(p-carboxylalkyloxyphenyl)-2,2-propane der Formel II werden in an sich bekannter Weise erhalten z.B. über die Veretherung von Bisphenol A mit Chloressigsäurederivaten, wie Methylester oder Na-Salz, in Gegenwart eines HCl-Akzeptors, wie NaOH oder $Na_2CO_3$ und werden gegebenenfalls in die Alkalisalze, insbesondere die Natrium- oder Kaliumsalze überführt. Bevorzugt ist die Isopropyliden-bis-(p-phenoxyessigsäure) und als Salz deren Natriumsalz.

Als Silikate der allgemeinen Formel III kommen vor allem die in DE-A1 3 440 194 beschriebenen Silikate in Betracht, weshalb auf diese Publikation und deren Angaben Bezug genommen wird. Als Alkalimetall M kommt vor allem Kalium und insbesondere Natrium in Betracht.

Diese Silikate werden in an sich bekannter Weise erhalten, wie dies z.B. in J.S. Falcone jr. in Kirk Othmer's Encyclopaedia of Chemical Technology, 3rd Edition, Bd. 20, S. 864 beschrieben ist und worauf Bezug genommen wird.

Als Silikatstabilisatoren (c) kommen beliebige wirksame Verbindungen in Betracht, z.B . Stabilisatoren wie sie in DE-A- 2 912 430 oder EP 0061694 beschrieben sind. Bevorzugt verwendet man als Stabilisatoren Phosphorsilizium-Verbindungen, wie sie aus der DE-A1 3 440 194 bekannt sind. Diese Verbindungen reagieren mit den Silikaten der Formel III unter Bildung von Organosilan-Silikat-Copolymeren.

Als geeignete organische Phosphor-Silizium-Verbindungen kommen im einzelnen solche der allgemeinen Formel V

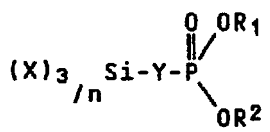

(V)

in Betracht, in der Y einen zweiwertigen aliphatischen oder cycloaliphatischen Rest mit 1 bis 10 Kohlenstoffatomen oder eine Phenylenalkylengruppe mit 7 bis 10 Kohlenstoffatomen bedeutet und n die Werte 1 oder 2 annehmen kann, wobei, wenn n = 1 ist, X für eine $OR_3$-Gruppe, in der $R^3$ eine geradkettige, verzweigte oder cyclische Alkylkette mit 1 bis 13 Kohlenstoffatomen, die gegebenenfalls durch Sauerstoffatome unterbrochen sein kann oder einen Acylrest mit bis zu 9 Kohlenstoffatomen bedeutet, und $R^1$ und $R^2$ gleich oder verschieden sind und für eine geradkettige, verzweigte oder cyclische Alkylgruppe mit 1 bis 13 Kohlenstoffatomen, die gegebenenfalls durch Sauerstoff unterbrochen sein kann, oder eine Aryl- bzw. Aralkylgruppe mit bis zu 20 Kohlenstoffatomen stehen, und wenn n = 2 ist, X ein Sauerstoffatom und $R^1$ ein Alkalimetall bedeuten und $R^2$ die oben genannte Bedeutung hat.

Die organischen Phosphor-Silicium-Verbindungen der oben genannten Formel V (z.B. mit n = 1) können nach bekannten Methoden hergestellt werden:

a) Addition von Dialkylphosphiten an Alkenyltrialkoxysilane in Gegenwart von Radikalbildnern oder
b) Umsetzung von Di- oder Trialkylphosphiten mit Halogenalkyltrialkoxysilanen.

Einige Vertreter dieser Verbindungsklasse sind bekannt und beispielsweise in J. Org. Chem. 25, 1191 (1960), DE-A2 2 219 983 und DE-A2 2 304 544 (Methode a)) sowie US-A 3 780 127 und US-A 3 816 550 (Methode b)) beschrieben. Weitere Verbindungen finden sich auch in dem Buch "Organosilicon Derivatives of Phosphorus and Sulfur" von S.N. Borisov, M.G. Voronkov und E.Ya. Lukavits, Plenum Press, New York-London 1971, Seite 94 ff..

Der Rest Y in den oben genannten Formel V stellt, wie oben ausgeführt, einen zweiwertigen aliphatischen oder cycloaliphatischen Rest mit 1 bis 10 Kohlenstoffatomen oder eine Phenylenalkylengruppe mit 7 bis 10 Kohlenstoffatomen dar.

Zweiwertige aliphatische Reste sind geradkettige oder verzweigte Alkylen- oder Alkenylengruppen, z.B. die Methylen-, Ethylen-, Propylen-, Butylen-, Hexylen-, Methylpropylen-, Butenylen- oder Hexenylengruppe.

Als cycloaliphatischer Rest ist beispielsweise die Ethylencyclohexylen- oder Propylencyclohexylengruppe zu nennen.

Phenylalkylengruppen sind z.B. die Phenylenmethylen- oder Phenylenethylengruppe.

Die bevorzugte Bedeutung von Y sind geradkettige oder verzweigte Alkylengruppen mit 1 bis 6 Kohlenstoffatomen, wobei die Ethylen-, Propylen-, Butylen- und Isobutylengruppe besonders bevorzugt sind.

Die bevorzugte Bedeutung von $R^3$ in der Formel V (n = 1) sind Alkylgruppen mit 1 bis 4 Kohlenstoffatomen.

$R^1$ und $R^2$ in Formel V (n = 1) stehen vorzugsweise ebenfalls für Alkylgruppen mit 1 bis 4 Kohlenstoffatomen.

Wenn n = 2 ist, bedeutet $R^1$ vorzugsweise Natrium oder Kalium.

Zu den organischen Phosphor-Silicium-Verbindungen der Formel V mit n = 2 gelangt man über die oben beschriebenen Phosphor-Silicium-Verbindungen der Formel V mit n = 1, die das Strukturelement $(R^3O)_3Si$- aufweisen. Man erhält sie durch Umsetzung in wäßriger Alkalihydroxidlösung bei einer Temperatur von 70 bis 100°C über einen Zeitraum von 10 bis 20 Stunden. Bei diesen Verbindungen handelt es sich um Phosphonoalkylsiloxane.

Die durch Reaktion der organischen Phosphor-Silizium-Verbindungen mit den Silikaten entstehenden Organosilan-Silikat-Copolymere können entweder in situ bei der Herstellung der Kühlstoff-Formulierung durch Reaktion der dort vorhandenen Alkalisilikate mit den organischen Phosphor-Silicium-Verbindung gemäß Formel V im Gewichtsverhältnis von 1:1 bis 10:1, vorzugsweise 2:1 bis 8:1 gebildet werden oder lassen sich auch vorher separat herstellen.

In diesem Fall wird das Alkalisilikat mit der organischen Phosphor-Silicium-Verbindung gemäß Formel V in den entsprechenden Mengen versetzt und bei einer Temperatur von 30 bis 150°C, vorzugsweise 30 bis 80°C, in Glykol oder Wasser oder auch in einer Glykol-Wasser-Mischung über einen Zeitraum von 5 bis 10 Stunden gerührt. Das resultierende Organosilan-Silikat-Copolymere, dessen Silikat-Anteil im Bereich von ca. 50 bis 90 Gew.%, vorzugsweise 65 bis 90 Gew.%, jeweils bezogen auf die Summe der beiden Reaktionspartner, liegt, kann dann zur Kühlstoffmischung, die die übrigen Komponenten enthält, gegeben werden.

Die Kühlstoffmischung kann dabei weitere an sich bekannte Korrosionsinhibitoren beispielsweise Borate, Nitrate oder Benzoate, Benzo- oder Tolutriazol sowie Antischaummittel oder andere Hilfsmittel enthalten (vgl. Ullmann, loc. cit.).

Zur Bereitung der Kühlmedien versetzt man die erfindungsgemäßen Kühlstoffmischungen mit Wasser und stellt so zweckmäßig 20 bis 50 vol.%ige wäßrige Lösungen her.

Die erfindungsgemäßen Kühlstoffmischungen bewirken sehr geringe Korrosion von Aluminium und zeichnen sich sowohl in unverdünntem Zustand als auch in wäßriger Lösung durch eine vorteilhafte Silikat-Stabilität aus.

Die nachfolgenden Beispiele sollen die Erfindung näher erläutern.

Die erfindungsgemäße Formulierung (Bsp. 1 und 2) weist im ASTM-Test 1384 (Glasware-Test) bessere Ergebnisse auf im Vergleich zu Beispiel 1 der JA-OS 206 676/1983 (Vergleichsbeispiel), wie aus der Tabelle 1 deutlich wird.

Beispiel 1

Man bereitet eine Mischung aus

2,10 % Di-Na-Salz der Säure der Formel IV

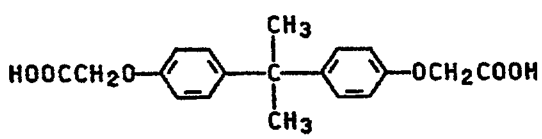

(IV),

0,15 % $Na_2SiO_3.5H_2O$

0,026 % 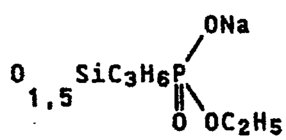

0,10 % Tolutriazol
0,155 % NaOH 50%ig
0,25 % $NaNO_3$
Rest Monoethylenglykol

Beispiel 2

Man bereitet eine Mischung aus

3,00 % Di-Na-Salz der Säure der Formel IV
0,15 % $Na_2SiO_3.5H_2O$

0,026 % 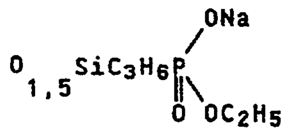

0,10 % Tolutriazol
0,155 % NaOH 50%ig
Rest Monoethylenglykol

Vergleichsbeispiel gemäß Bsp. 1 JA-OS 206 676/1983

Man bereitet eine Mischung aus

0,64 % Triethanolaminsalz der Säure der Formel IV
2,7 % Triethanolaminphosphat
0,05 % Natriumphosphat
0,1 % Benzotriazol
1,51 % Wasser
95 % Monoethylenglykol

Im ASTM-Test 1384 wurden folgende Formulierungen geprüft

A = 25 vol.%ige wäßrige Lösung der Mischung von Beispiel 1
B = 32 vol.%ige wäßrige Lösung der Mischung von Beispiel 2
C = 25 vol.%ige wäßrige Lösung der Mischung des Vergleichsbeispiels
D = 32 vol.%ige wäßrige Lösung der Mischung des Vergleichsbeispiels

In der Tabelle 1 werden die gemessenen Gewichtszu- oder -abnahmen (in $g/m^2$) gemäß ASTM 1384 angegeben.

Tabelle 1

| | Bsp. 3 | Bsp. 4 | Vgl. bsp. 2 | Vgl. bsp. 3 |
|---|---|---|---|---|
| Kupfer | + 0,03 | − 0,04 | − 0,03 | + 0,04 |
| Weichlot | + 0,02 | − 0,05 | + 0,01 | + 0,05 |
| Messing | + 0,02 | − 0,03 | − 0,10 | + 0,04 |
| Stahl | + 0,02 | − 0,01 | − 0,04 | − 0,03 |
| Grauguß | − 0,02 | − 0,01 | − 0,73 | − 0,47 |
| Gußaluminium | + 0,03 | − 0,38 | − 5,51 | − 2,45 |

Der Tabelle 1 ist zu entnehmen, daß die erfindungsgemäßen Formulierungen einen deutlich besseren Schutz sowohl bei Grauguß als auch bei Gußaluminium bieten.

## Patentansprüche

1. Kühlstoffmischungen auf Glykolbasis, die frei von Nitriten und Phosphaten sind, gekennzeichnet durch einen Gehalt an

a) 1 - 5 Gew.% der Alkalisalze der Säure II

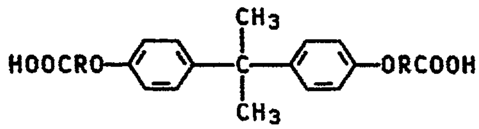 (II),

in der der Rest R eine

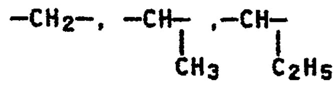

oder $CH_2CH_2CH_2$-Gruppe bedeutet,
b) 0,1 - 1 Gew.% Silikate der allgemeinen Formel III

$$(MO)_q SiO_{\frac{4-q}{2}} \quad \text{(III)},$$

in der M ein Alkalimetall und q die Werte 0,4 bis 4 bedeutet,
c) 0,01 - 0,2 Gew.% eines Silikatstabilisators
d) 0 - 0,5 Gew.% Alkalinitrate
e) 0,05 - 0,2 Gew.% Benzo- oder Tolutriazol
f) 0,5 - 2 Gew.% Borax
g) 0,05 - 1 Gew.% NaOH,

wobei alle Prozentangaben auf das in der Kühlstoffmischung enthaltene Glykol bezogen sind.

2. Kühlstoffmischung gemäß Anspruch 1, dadurch gekennzeichnet, daß sie als Komponente (a) das Natriumsalz der Isopropyliden-bis-(p-phenoxyessigsäure) enthält.

3. Kühlstoffmischung gemäß Anspruch 1, dadurch gekennzeichnet, daß sie als Komponente (c) Silikatstabilisatoren enthält der Formel

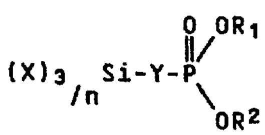 (V)

in der Y einen zweiwertigen aliphatischen oder cycloaliphatischen Rest mit 1 bis 10 Kohlenstoffatomen oder eine Phenylenalkylengruppe mit 7 bis 10 Kohlenstoffatomen bedeutet und n die Werte 1 oder 2 annehmen kann, wobei, wenn n = 1 ist, X für eine $OR_3$-Gruppe, in der $R^3$ eine geradkettige, verzweigte oder cyclische Alkylkette mit 1 bis 13 Kohlenstoffatomen, die gegebenenfalls durch Sauerstoffatome unterbrochen sein kann oder einen Acylrest mit bis zu 9 Kohlenstoffatomen bedeutet, und $R^1$ und $R^2$ gleich oder verschieden sind und für eine geradkettige, verzweigte oder cyclische Alkylgruppe mit 1 bis 13 Kohlenstoffatomen, die gegebenenfalls durch Sauerstoff unterbrochen sein kann, oder eine Aryl- bzw. Aralkylgruppe mit bis zu 20 Kohlenstoffatomen stehen, und wenn n = 2 ist, X ein Sauerstoffatom und $R^1$ ein Alkalimetall bedeuten und $R^2$ die oben genannte Bedeutung hat.

## Claims

1. A glycol-based coolant mixture which is free of nitrites and phosphates, containing
a) 1 - 5% by weight of an alkali metal salt of acid II

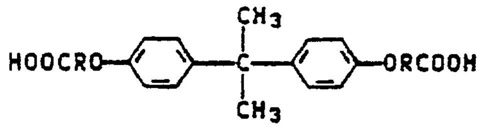

(II),

where R is a 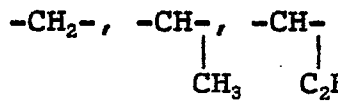 or $CH_2CH_2CH_2$ group,

b) 0.1 - 1% by weight of a silicate of the general formula III

$$(MO)_qSiO_{\frac{4-q}{2}} \quad (III),$$

where M is an alkali metal and q is from 0.4 to 4,
c) 0.01 - 0.2% by weight of a silicate stabilizer,
d) 0 - 0.5% by weight of an alkali nitrate,
e) 0.05 - 0.2% by weight of benzotriazole or tolutriazole,
f) 0.5 - 2% by weight of borax, and
g) 0.05 - 1% by weight of NaOH, all the percentages being based on the glycol present in the coolant mixture.

2. A coolant mixture as claimed in claim 1, which contains as component: (a) the sodium salt of isopropylidenebis (p-phenoxyacetic acid).

3. A coolant mixture as claimed in claim 1, which contains as component (c) a silicate stabilizer of the formula

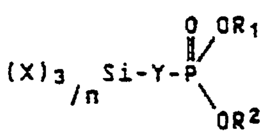

(V)

where Y is a divalent aliphatic or cycloaliphatic radical of 1 to 10 carbon atoms or phenylenealkylene of 7 to 10 carbon atoms, n can be 1 or 2, in the case of n = 1 x being $OR^3$, where $R^3$ is straight-chain, branched or cyclic alkyl of 1 to 13 carbon atoms, which may be interrupted by oxygen, or acyl of up to 9 carbon atoms, and $R^1$ and $R^2$ being identical or different and each being a straightchain, branched or cyclic alkyl of 1 to 13 carbon atoms, which may be interrupted by oxygen, or aryl or aralkyl of up to 20 carbon atoms, and in the case of n = 2 X being oxygen, $R^1$ being an alkali metal and $R^2$ having the abovementioned meanings.

**Revendications**

1. Mélanges de refroidissement à base de glycol, exempts de nitrites et de phosphates, caractérisés par une teneur de
a) 1–5% en poids d'un sel alcalin de l'acide II

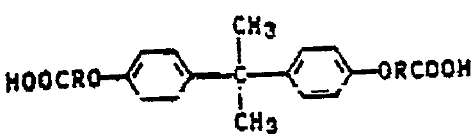

(II)

dans lequel le reste R représente un groupe

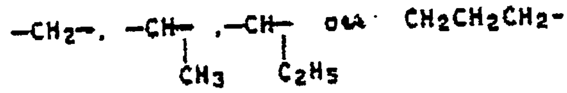

b) 0,1–1% en poids de silicate de formule générale

$$(MO)_q SiO_{\frac{4-q}{2}} \qquad (III).$$

dans laquelle M représente un métal alcalin et q a la valeur de 0,4 à 4,
c) 0,01–0,2% en poids d'un stabilisateur de silicate,
d) 0–0,5% en poids de nitrate alcalin,
e) 0,05–2% en poids de benzotriazole ou de tolutriazole,
f) 0,5–2% en poids de borax,
g) 0,05–1% en poids de NaOH,
tous les pourcentages étant exprimés par rapport au glycol contenu dans le mélange de refroidissement.

2. Mélange de refroidissement selon la revendication 1, caractérisé en ce qu'il contient comme composant a) le sel de sodium de l'acide isopropylidène–bis–(p–phénoxyacétique).

3. Mélange de refroidissement selon la revendication 1, caractérisé en ce qu'il contient comme composant c) des stabilisateurs de silicate de formule

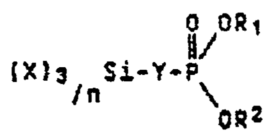

(V)

dans laquelle Y est un reste aliphatique ou cycloaliphatique bivalent ayant de 1 à 10 atomes de carbone ou un groupement phénylènealkylène ayant de 7 à 10 atomes de carbone et n peut prendre la valeur 1 ou 2, de telle sorte que quand n=1, X est mis pour un groupe $OR^3$, dans lequel $R^3$ représente une chaîne alkyle droite, ramifiée ou cyclique ayant de 1 à 13 atomes de carbone qui peut éventuellement être interrompue par des atomes d'oxygène, ou un reste acyle ayant jusqu'à 9 atomes de carbone, et $R^1$ et $R^2$ sont identiques ou différents et représentent des groupements alkyles linéaires, ramifiés ou cycliques ayant de 1 à 13 atomes de carbone, qui peuvent être éventuellement interrompus par de l'oxygène, et quand n=2, X est un atome d'oxygène, R' représente un métal alcalin et $R_2$= est tel que défini précédemment.